# EUROPEAN PATENT APPLICATION

(11) **EP 4 492 022 A1**
(43) Date of publication of application: **15.01.2025**
(21) Application number: 24182319.4
(22) Date of filing: 14.06.2024
(51) Int. Cl.: G01K 1/14, G01K 1/143, G01K 1/16, H01R 9/00

(54) **TEMPERATURE MEASURING ASSEMBLY FOR TEMPERATURE SENSOR**

(30) Priority: 13.07.2023 CN 202310862073
(71) Applicant: ABB SCHWEIZ AG, 5400 Baden (CH)
(72) Inventor: CHEN, Yanguo, Xiamen, 361006 (CN); CHEN, Xu, Xiamen, 361026 (CN); LIU, Jing, Xiamen, 361000 (CN)
(74) Representative: Zimmermann & Partner Patentanwälte mbB

(57) **Abstract**

One or more embodiments of the present disclosure relate to a temperature measuring assembly for a temperature sensor, a temperature sensor, and an electrical system. A temperature measuring assembly (100) for a temperature sensor comprises: a temperature measuring element (10) configured to generate a measurement signal indicative of a temperature of an object to be measured (1A, 1B); a thermally conductive body (20) configured to conduct heat of the object to be measured (1A, 1B) to the temperature measuring element (10), the thermally conductive body (20) comprising: a tubular portion (21) configured to receive the temperature measuring element (10); a protruding portion (22) extending from the tubular portion (21) and configured to abut against a surface of the object to be measured (1A, 1B); and a ground flange (23) located at the protruding portion (22) and configured to connect with a ground terminal (30) to ground the thermally conductive body (20). The temperature measuring assembly has advantages such as a compact structure, convenient use and low manufacturing cost.

## Description

### FIELD

The present disclosure generally relates to a temperature sensor and, more specifically, relates to a temperature measuring assembly for a temperature sensor.

### BACKGROUND

A temperature sensor is usually used to monitor an operating temperature of an electrical device and lines used matched therewith. Good monitoring of the operating temperature may ensure that the electrical device is in a proper operating state and avoid potential safety problems or malfunctions.

In some cases, an object or a point to be measured may have very small dimensions so that it is difficult for fix a probe of the temperature sensor onto the object or point to achieve temperature measurement, or the probe cannot duly contact these objects to be measured to achieve accurate measurement.

### SUMMARY

To at least partially address the above and other potential problems, the present disclosure provides a temperature measuring assembly for a temperature sensor, a temperature sensor, and an electrical system.

According to a first aspect of the present disclosure, there is provided a temperature measuring assembly for a temperature sensor. The temperature measuring assembly comprises a temperature measuring element and a thermally conductive body. The temperature measuring element is configured to generate a measurement signal indicative of a temperature of an object to be measured. The thermally conductive body comprises a tubular portion configured to receive the temperature measuring element; a protruding portion extending from the tubular portion and configured to abut against a surface of the object to be measured; and a ground flange located at the protruding portion and configured to connect with a ground terminal to ground the thermally conductive body.

According to one or more embodiments, the tubular portion, the protruding portion, and the ground flange together form a groove that receives an annular band around the object to be measured to secure the temperature measuring assembly to the object to be measured.

According to one or more embodiments, the ground flange comprises a flat portion configured to be clamped by a clamping member of the ground terminal.

According to one or more embodiments, the ground flange extends from the protruding portion.

According to one or more embodiments, the tubular portion, the protruding portion and the ground flange are integrally formed.

According to one or more embodiments, the temperature measuring assembly further comprises a transmission line configured to connect the temperature measuring element with the temperature sensor. The transmission line is partially received by the tubular portion. The temperature sensing element is configured to transmit the measurement signal to the temperature sensor via the transmission line.

According to one or more embodiments, an interior of the tubular portion is filled with an insulating thermally conductive material. The temperature measuring element is spaced from the tubular portion by the insulating thermally conductive material.

According to one or more embodiments, the protruding portion further comprises a positioning hole. The positioning hole is configured to align with a mounting hole of the object to be measured for securing the temperature measuring assembly to the object to be measured.

According to a second aspect of the present disclosure, there is provided a temperature sensor. The temperature sensor comprises: a processing device; and the temperature measuring assembly for a temperature sensor according to the first aspect of the present disclosure.

According to a third aspect of the present disclosure, there is provided an electrical system. The electrical system comprises an electrical device and the temperature sensor according to the second aspect of the present disclosure. The temperature sensor is configured to detect a temperature of at least a portion of the electrical device.

These and other aspects will become apparent from and elucidated with reference to the drawings and depictions of a plurality of embodiments of the present disclosure.

### BRIEF DESCRIPTION OF THE DRAWINGS

The above and other objectives, features, and advantages of exemplary embodiments of the present disclosure will become more apparent from the following detailed description with reference to the accompanying drawings. In the figures, several embodiments of the present disclosure are shown in an exemplary but unrestrictive manner, wherein:
FIG. 1 illustrates a perspective view of a temperature measuring assembly according to an embodiment of a first aspect of the present disclosure;
FIG. 2 illustrates a cross-sectional view of the temperature measuring assembly shown in FIG. 1;
FIG. 3a-FIG. 3b illustrate an example of an object to be measured to which the temperature measuring assembly according to the first aspect of the present disclosure is applied, wherein FIG. 3a is a side view of the illustrated example, and FIG. 3b is a partially enlarged view of an area A in FIG. 3a;
FIG. 4a-FIG. 4c illustrate another example of an object to be measured to which the temperature measuring assembly according to the first aspect of the present disclosure is applied, wherein FIG. 4a is a perspective view of the illustrated example, FIG. 4b is a plan view of the illustrated example, and FIG. 4c is a partially enlarged view of an area B in FIG. 4b; and
FIG. 5 is a schematic block diagram illustrating an electrical system having the temperature sensor including the temperature measuring assembly according to the first aspect of the present disclosure and an electrical device.

In all figures, the same or similar reference numbers denote the same or corresponding parts.

### DETAILED DESCRIPTION OF EMBODIMENTS

The subject matter described herein will now be discussed with reference to several exemplary embodiments. These embodiments are discussed only to enable those skilled in the art to better understand and thus implement the subject matter described herein, and do not imply any limitation on the scope of the subject matter.

The terms "comprise" or "include" and variations thereof are to be construed as openended terms that mean "include, but not limited to". The term "or" should be read as "and/or" unless the context clearly dictates otherwise. The term "based on" is to be understood as "based at least in part on". The terms "one embodiment" and "an embodiment" are to be understood as "at least one embodiment". The term "another embodiment" is to be understood as "at least one other embodiment".

Unless specified or limited otherwise, the terms "connect" and "couple" and variations thereof are used broadly and cover direct and indirect connection and coupling. Furthermore, "connect" and "couple" are not restricted to physical or mechanical connection or coupling. In the following description, the same reference numerals and signs are used to describe the same, similar or corresponding parts in the drawings. Other explicit and implicit definitions may be included below.

Due to the high temperature of the object to be measured in conventional designs, it is usually difficult to mount a temperature sensor directly on the object to be measured. As an alternative, a temperature measuring assembly connected to the temperature sensor is mounted on the object to be measured to obtain information associated with the temperature. However, the conventional temperature measuring assembly is usually complicated in structure and large in size since it needs to adapt to the temperature measurement and mounting of many types of objects to be measured. As a result, such type of temperature measuring assemblies are of a high manufacturing cost. In addition, such type of temperature measuring assemblies do not have a ground terminal for easy connection of a ground function, which results in a need to debug and install the ground function of the temperature measuring assembly before the temperature measuring operation, which in turn causes in a complicated temperature measuring process. This also causes a complicated step of disassembling the temperature measuring assembly. Accordingly, it is desirable to provide a temperature measuring assembly that is compact, easy to use, and inexpensive to manufacture.

The present disclosure aims to provide a temperature measuring assembly to at least partially address these problems.

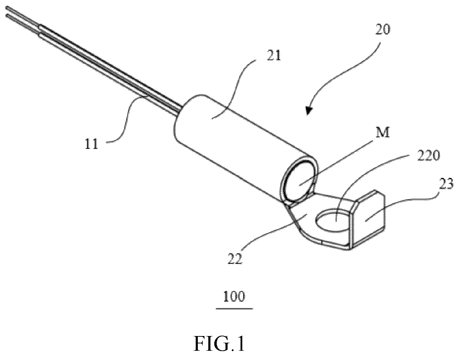

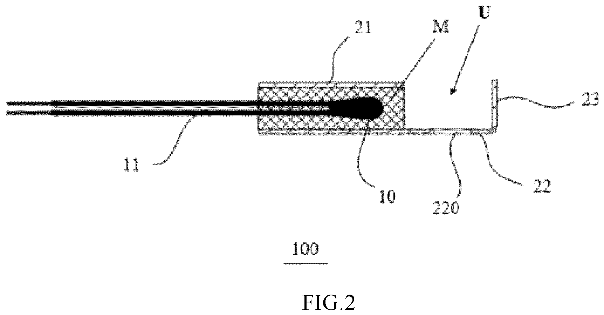

FIG. 1 and FIG. 2 schematically illustrate one example of a temperature measuring assembly 100 for a temperature sensor provided by the present disclosure, wherein FIG. 1 illustrates a perspective view of a temperature measuring assembly according to an embodiment in a first aspect of the present disclosure, and FIG. 2 illustrates a cross-sectional view of the temperature measuring assembly shown in FIG. 1. The temperature measuring assembly 100 comprises a temperature measuring element 10 and a thermally conductive body 20. The thermally conductive body 20 comprises a tubular portion 21, a protruding portion 22 extending from the tubular portion 21, and a ground flange 23 on the protruding portion 22. The tubular portion 21 is configured to receive the temperature measuring element 10. The protruding portion 22 is configured to abut against a surface of the object to be measured, so that the heat of the object to be measured is conducted to the temperature measuring element 10 through the thermally conductive body 20. The temperature measuring element 10 is configured to generate a measurement signal indicative of the temperature of the object to be measured in response to heat conducted from the thermally conductive body 20. A processing device (not shown) of the temperature sensor is configured to determine the temperature of the object to be measured according to the measurement signal. In one example, the temperature measuring element 10 may be a negative temperature coefficient NTC thermistor. The negative temperature coefficient NTC thermistor can change resistance in response to a change in temperature, so that an electrical signal representing the temperature of the object to be measured can be generated. The electrical signal is then sent to the processing device of the temperature sensor.

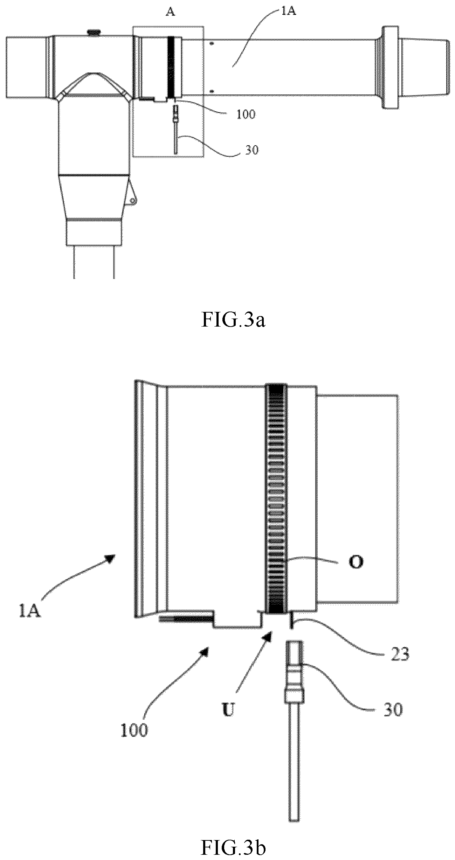

The processing device of the temperature sensor is configured to receive and process the electrical signal to determine the temperature of the object to be measured. In an alternative example, the temperature measuring element 10 may be a resistance temperature detector RTD. The resistance temperature detector RTD may also change resistance in response to a change in the temperature so that an electrical signal representative of the temperature of the object to be measured can be generated. The processing device of the temperature sensor then determines the temperature of the object to be measured on the basis of the electrical signal. The processing device of the temperature sensor may also be connected to a user interface, such as a display, in order to display information about the temperature of the object to be measured to the user. Examples of the object to be measured and the implementation of the measurement of the temperature thereof with the temperature measuring assembly according to the present disclosure will be described below with reference to FIG. 3a-FIG. 4c.

Further referring to FIG. 1 and FIG. 2, the temperature sensing element 10 may be wiredly or wirelessly connected to the processing device of the temperature sensor. In the example shown, the temperature measuring element 10 is connected to the processing device of the temperature sensor via a transmission line 11. The transmission line 11 is configured to transmit a measurement signal representing the temperature of the object to be measured from the temperature measuring element 10 to the processing device of the temperature sensor. The transmission line 11 may be partially received by the tubular portion 21. In an alternative example, the temperature measuring element 10 may comprise a wireless module, such as an antenna, for wirelessly transmitting the measurement signal from the temperature measuring element 10 to the processing device of the temperature sensor. Other components may also be used to connect the temperature measuring element 10 in wire or wirelessly to the processing device of the temperature sensor.

The ground flange 23 may be configured to connect to a ground terminal to ground the thermally conductive body 20 during measurement of the object to be measured using the temperature measuring assembly 100. This may avoid the influence of the potential of the object to be measured on the measurement result.

The ground flange 23 may further comprise a flat portion. The flat portion is configured to be clamped by a clamping member of a ground terminal so that the ground terminal may be conveniently connected to the ground flange 23. The flat portion may also be configured to be inserted into the ground terminal such that the ground flange 23 is connected to the ground terminal.

In one embodiment, an interior of the tubular portion 21 may be filled with an insulating thermally conductive material M by which the temperature measuring element 10 is spaced from the tubular portion 21. The insulating thermally conductive material is used to conduct heat and electrical insulation. The insulating thermally conductive material may be selected from a group comprising: polyimide (PI), polytetrafluoro ethylene (PTFE), polyphenylene ether (PPE), glass fiber reinforced plastic (FRP) and a ceramic material. The heat from the object to be measured is conducted through the thermally conductive body 20 to the temperature measuring element 10 via the insulating thermally conductive material M.

In addition, after the insulating thermally conductive material clads the temperature measuring element 10, the air gap around the temperature measuring element 10 is reduced and thereby the high thermal resistance caused by incomplete contact between the insulating thermally conductive material and the temperature measuring element 10 is reduced. The efficiency of the thermally conductive body 20 of the temperature measuring assembly 100 conducting the heat to the temperature measuring element 10 is thereby improved, and the temperature measuring element 10 may more accurately measure the temperature of the object to be measured. The insulating thermally conductive material M also prevents the electric charge on the thermally conductive body 20 from migrating to the temperature measuring element 10 to further prevent the influence of the electric potential of the object to be measured in contact with the thermally conductive body 20 on the measurement of the temperature measuring element 10. This also improves the reliability and service life of the temperature measuring element 10.

In one embodiment, the tubular portion 21, the protruding portion 22 and the ground flange 23 may be integrally formed. In other embodiments, the tubular portion 21, the protruding portion 22 and the ground flange 23 may be manufactured independently and then assembled together. The thermally conductive body 20 formed in this way is simple in structure and low in the manufacturing cost.

In one embodiment, the tubular part 21, the protruding portion 22 and the ground flange 23 together form a groove U. The groove U receives an annular band around the object to be measured to facilitate securing the temperature measuring assembly 100 to the object to be measured. In some embodiments, the ground flange 23 extends from the protruding portion 22. The thermally conductive body 20 is structurally compact and can be conveniently mounted on the object to be measured.

The protruding portion 22 may further include a positioning hole 220. The positioning hole 220 is configured to align with a mounting hole of the object to be measured to allow a fastener for securing the temperature measuring assembly 100 to pass through the positioning hole 220 and the mounting hole and secure the temperature measuring assembly 100 to the object to be measured. In some examples, the fastener for securing the temperature measuring assembly 100 may be a bolt, a rivet or a pin. In this way, the temperature measuring assembly 100 may be adapted to be mounted to the object to be measured having a mounting hole, and the protruding portion 22 remains in contact with the surface of the object to be measured during temperature measurement to achieve good heat conduction.

FIG. 3a-FIG. 3b illustrate an example of an object 1A to be measured to which the temperature measuring assembly 100 is applied, wherein FIG. 3a is a side view of the shown object 1A to be measured, and FIG. 3b is a partially enlarged view of an area A in FIG. 3a.

In FIG. 3a and FIG. 3b, the object 1A to be measured comprises an annular band O around itself. The object 1A to be measured may be a cable. The groove U formed by the tubular portion 21, the protruding portion 22 and the ground flange 23 together may receive an annular band O to secure the temperature measuring assembly 100 on the object 1A to be measured. After the temperature measuring assembly 100 is fixed on the object 1A to be measured, the protruding portion 22 abuts against the surface of the object 1A to be measured, so that the heat of the object 1A to be measured can be conducted to the temperature measuring element 10 through the protruding portion 22 and the tubular portion 21. In case where the heat is conducted to the temperature measuring element 10, the temperature measuring element 10 generates a measurement signal representing the temperature of the object 1A to be measured. The measurement signal is then transmitted to the processing device of the temperature sensor to determine the temperature of the object 1A to be measured. Information about the temperature of the object 1A to be measured may then be presented to the user, for example via a display, so that the temperature of the object 1A to be measured can be monitored. Based on the comparison between the temperature of the object 1A to be measured and a threshold value, the user may determine whether an operation state of the object 1A to be measured is normal. This makes it possible to find anomalies of the object to be measured before a safety problem or failure occurs.

Before the measurement starts, a further ground terminal 30 providing a grounding function may be connected to the ground flange 23 to keep the thermally conductive body 20 grounded during the measurement. In the case where the thermally conductive body 20 is grounded, the influence of the potential of the object to be measured on the measurement result may be avoided. The ground terminal 30 may clamp the flat portion of the ground flange 23 by the clamping member of the ground terminal 30 to prevent the ground terminal 30 from being separated from the ground flange 23. In other examples, the flat portion of the ground flange 23 may be configured to be inserted into an end of the ground terminal 30. Additionally or alternatively, the dimensions of the temperature measuring assembly 100 according to the present disclosure may be designed to be very small as compared with the dimensions of the object 1A to be measured. The temperature measuring assembly 100 may thus be flexibly fitted to any position on the object 1A to be measured in order to achieve a measurement of a desired point to be measured. The temperature measuring assembly 100 may also be adapted for temperature measurement of objects to be measured that are relatively small in volume.

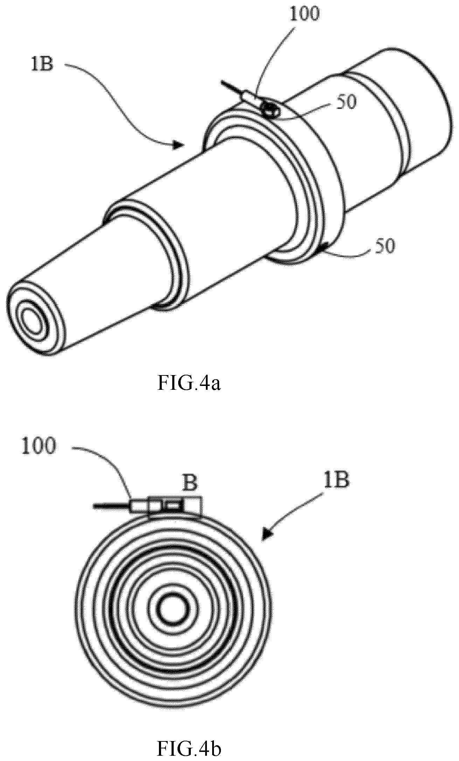

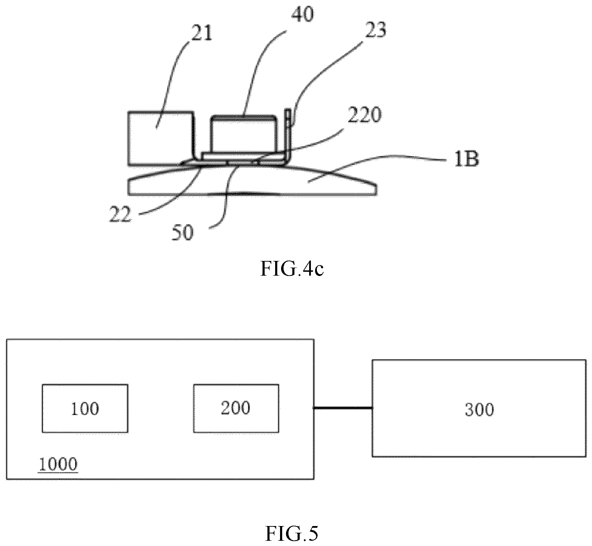

FIG. 4a-FIG. 4c illustrate an example of an object 1B to be measured to which the temperature measuring assembly 100 is applied, wherein FIG. 4a is a perspective view of the shown object 1B to be measured, FIG. 4b is a plan view of the shown object 1B to be measured, and FIG. 4c is a partially enlarged view of an area B in FIG. 4b.

In FIG. 4a-FIG. 4c, the temperature measuring assembly 100 is fixed to the object 1B to be measured by aligning the positioning hole 220 with the mounting hole 50 of the object to be measured, and then by using a bolt 40 which passes through the positioning hole 220 and the mounting hole 50. The object 1B to be measured may be a cable sleeve. Similar to the above-described process of measuring the temperature of the object 1A to be measured, the protruding portion 22 abuts against the surface of the object 1B to be measured, so that the heat of the object 1B to be measured may be conducted to the temperature measuring element 10 through the protruding portion 22 and the tubular portion 21.

In case where heat is conducted to the temperature measuring element 10, the temperature measuring element 10 generates a measurement signal representing the temperature of the object 1B to be measured and then transmits the measurement signal to the processing device of the temperature sensor to determine the temperature of the object 1B to be measured. However, when the temperature of the object 1B is measured, the ground flange 23 may not be used, that is, the grounding function may not be employed. In this case, only the insulating thermally conductive material filling the interior of the tubular portion 21 may be used to protect the temperature measuring element 10 from the influence from the high potential of the object 1B to be measured. Additionally, the bolt 40 may also function to conduct heat in the interior of the object 1B to be measured to the thermally conductive body 20 of the temperature measuring assembly 100, so that the temperature measuring element 100 can generate measurement information indicative of the temperature inside the object 1B to be measured.

In the example of temperature measurement for the example object to be measured in FIG. 3a-FIG. 4c, the temperature measuring assembly 100 according to the present disclosure may, in some cases, obtain a temperature measurement result with a maximum error of less than 2K. This particularly helps the user to determine whether an operating state of the object to be measured is normal according to the temperature of the object to be measured.

Based on the temperature measuring assembly 100 provided by the present disclosure, in conjunction with the examples described above with reference to FIG. 3-FIG. 4c, the design of the temperature measuring assembly 100 of the present disclosure may be applied to enable temperature measurement for additional different objects to be measured. The design of the temperature measuring assembly 100 of the present disclosure may also provide a convenient ground connection (if necessary) as well as insulation protection by means of the insulating thermally conductive material M during the process of performing temperature measurements on the objects to be measured, so that the accuracy of the measurement result can be guaranteed. Accordingly, these examples are also included within the scope of the present disclosure.

FIG. 5 is a schematic block diagram illustrating an electrical system having the temperature sensor including the temperature measuring assembly according to the first aspect of the present disclosure and an electrical device. The electrical system comprises a temperature sensor 1000 and an electrical device 300. The electrical device 300 may be, for example, a switch cabinet. In one embodiment, the temperature sensor 1000 is mounted at a point of interest inside the electrical device 300 to measure a temperature. Alternatively, the electrical device 300 may be other type of electrical device, and the temperature sensor 1000 may also be mounted on a portion of an exterior of the electrical device 300.

The temperature sensor 1000 comprises a processing device 200, and the temperature measuring assembly 100 for the temperature sensor as described above. The processing device 200 may be configured to determine the temperature of the object to be measured after receiving the measurement signal from the temperature measuring assembly 10 as described above with reference to FIG. 3a-FIG. 4c. The processing device 200 may comprise a signal processing device such as an integrated circuit IC, a microcontroller MCU or other available signal processors. The processing device 200 may further comprise an analog-to-digital converter ADC for converting the measurement signal from the temperature measuring assembly 10 into an input signal for the signal processing device. The signal processing device may be configured to output an output signal relating to the temperature according to the input signal, and the output signal may be provided to the user subsequently.

The temperature sensor 1000 may implement temperature measurement of objects which include, but are not limited to the above-described objects 1A and 1B to be measured. That is, after a similar step of mounting the temperature measuring assembly 100 on the object 1A to be measured or the object 1B to be measured is performed, the temperature sensor 1000 including the temperature measuring assembly 100 and the processing device 200 may also be used to measure the temperature of the ordinary electrical device 300, particularly to detect the temperature of at least a portion of the electrical device. Accordingly, the present disclosure further provides an electrical system including the temperature sensor 1000 and an electrical device 300, wherein the temperature sensor may be configured to detect a temperature of at least a portion of the electrical device 300.

The temperature sensor and the electrical system also enjoy the benefits described with respect to the temperature measuring assembly 100 for the temperature sensor. For the sake of brevity, a detailed description thereof will not be presented here.

Although the subject matter has been described in language specific to structural features and/or methodological acts, it is to be understood that the subject matter specified in the appended claims is not necessarily limited to the specific features or acts described above. Rather, the specific features and acts described above are disclosed as example forms of implementing the claims.

## Claims

1. A temperature measuring assembly (100) for a temperature sensor, comprising:
a temperature measuring element (10) configured to generate a measurement signal indicative of a temperature of an object to be measured (1A, 1B);
a thermally conductive body (20) configured to conduct heat of the object to be measured (1A, 1B) to the temperature measuring element (10), the thermally conductive body (20) comprising:
a tubular portion (21) configured to receive the temperature measuring element (10);
a protruding portion (22) extending from the tubular portion (21) and configured to abut against a surface of the object to be measured (1A, 1B); and
a ground flange (23) located at the protruding portion (22) and configured to connect with a ground terminal (30) to ground the thermally conductive body (20).

2. The temperature measuring assembly (100) according to claim 1, wherein the tubular portion (21), the protruding portion (22) and the ground flange (23) together form a groove (U) that receives an annular band (O) around the object (1A) to be measured to secure the temperature measuring assembly (100) to the object (1A) to be measured.

3. The temperature measuring assembly (100) according to claim 1 or 2, wherein the ground flange (23) comprises a flat portion configured to be clamped by a clamping member of the ground terminal (30).

4. The temperature measuring assembly (100) according to any of claims 1 to 3, wherein the ground flange (23) extends from the protruding portion (22).

5. The temperature measuring assembly (100) according to any of claims 1 to 4, wherein the tubular portion (21), the protruding portion (22) and the ground flange (23) are integrally formed.

6. The temperature measuring assembly (100) according to any of claims 1 to 5, further comprising:
a transmission line (11) configured to connect the temperature measuring element (10) with the temperature sensor, the transmission line (11) is partially received by the tubular portion (21), and the temperature sensing element (10) is configured to transmit the measurement signal to the temperature sensor via the transmission line (11).

7. The temperature measuring assembly (100) according to any of claims 1 to 6, wherein an interior of the tubular portion (21) is filled with an insulating thermally conductive material (M), and the temperature measuring element (10) is spaced from the tubular portion (21) by the insulating thermally conductive material (M).

8. The temperature measuring assembly (100) according to any of claims 2 to 7, wherein the protruding portion (22) further comprises a positioning hole (220), and the positioning hole (220) is configured to align with a mounting hole (50) of the object to be measured for securing the temperature measuring assembly (100) to the object (1B) to be measured.

9. A temperature sensor (1000), comprising:
a processing device (200); and
the temperature measuring assembly (100) for the temperature sensor according to any of claims 1-8.

10. An electrical system, comprising:
an electrical device (300); and
the temperature sensor (1000) according to claim 9, configured to detect a temperature of at least a portion of the electrical device (300).
